# EUROPÄISCHE PATENTSCHRIFT

(11) **EP 2 656 015 B1**
(45) Veröffentlichungstag und Bekanntmachung des Hinweises auf die Patenterteilung: **30.11.2016**
(21) Anmeldenummer: 11805473.3
(22) Anmeldetag: 16.12.2011
(51) Int. Cl.: G01D 11/24

(54) **PORTABLES OPTISCHES SENSORMODUL**
PORTABLE OPTICAL SENSOR MODULE
MODULE DE CAPTEUR OPTIQUE PORTABLE

(30) Priorität: 20.12.2010 DE 102010063531
(43) Veröffentlichungstag der Anmeldung: 30.10.2013
(73) Patentinhaber: Leica Geosystems AG, 9435 Heerbrugg (CH)
(72) Erfinder: GLÖCKLER, Gerd, 89197 Weidenstetten (DE)
(74) Vertreter: Lorenz, Markus
(86) Internationale Anmeldenummer: PCT/EP2011/073081
(87) Internationale Veröffentlichungsnummer: WO 2012/084722

(56) Entgegenhaltungen:
- US-A- 3 948 549
- US-B1- 6 527 398

## Beschreibung

Die Erfindung betrifft ein portables optisches Sensormodul mit wenigstens einer an einer Außenseite des portablen optischen Sensormoduls angeordneten Verriegelungsvorrichtung zur lösbaren Befestigung des portablen optischen Sensormoduls auf einer Trägerplattform.

Portable optische Sensormodule bzw. optische Geräte, wie beispielsweise Luftbildkameras oder Lidarsysteme, werden in Trägerplattformen mit passiver und/oder aktiver Lagestabilisierung eingebaut. Bekannte optische Geräte mit starren Tragegriffen haben den Nachteil, dass das optische Gerät nach dem Einsetzen in die Trägerplattform mit zusätzlichen Elementen (beispielsweise Schraubverbindungen, Adapterringe oder dergleichen) gesichert werden muss. Bestehende klappbare oder verschiebbare Griffe an derartigen optischen Geräten sind häufig ergonomisch ungünstig angeordnet (beispielsweise direkt über dem Gerät) oder erfüllen die Crash safety-Anforderungen gemäß DO 160 nicht.

Das Dokument US 6 527 398 A offenbart ein optisches Gassensormodul, welches als Einschubmodul in einem 19-Zoll-Rahmenträger lösbar befestigt werden kann.

Das Dokument US 3 948 549 A zeigt ein portables Messverstärker-Modul mit einer zur lösbaren Befestigung auf einem Gestellrahmen klappbaren Griffvorrichtung, die im aufgeklappten Zustand als Tragegriff für den Transport des Moduls verwendet werden kann.

Der vorliegenden Erfindung liegt die Aufgabe zugrunde, ein portables optisches Sensormodul der eingangs erwähnten Art hinsichtlich der lösbaren Befestigung auf einer Trägerplattform zu verbessern.

Diese Aufgabe wird erfindungsgemäß durch ein portables optisches Sensormodul mit wenigstens einer an einer Außenseite des portablen optischen Sensormoduls angeordneten Verriegelungsvorrichtung zur lösbaren Befestigung des portablen optischen Sensormoduls auf einer Trägerplattform gelöst, wobei die wenigstens eine Verriegelungsvorrichtung eine klappbare Griffvorrichtung aufweist, welche in einem geöffneten Verriegelungszustand der wenigstens einen Verriegelungsvorrichtung einen Tragegriff für das portabel optische Sensormodul bildet.

Dadurch wird das optische Gerät in vorteilhafter Weise mit einer Verriegelungsvorrichtung versehen, welche im entriegelten Zustand als Tragegriff dient. Das optische Gerät bzw. das portable optische Sensormodul kann mit wenigen Handgriffen und ohne Werkzeug oder sonstige Hilfsmittel, insbesondere unter Einhaltung der Crash safety-Anforderungen gemäß DO 160 befestigt bzw. verriegelt werden.

Die wenigstens eine Verriegelungsvorrichtung kann wenigstens eine Verriegelungsklaue aufweisen, welche in dem geschlossenen Verriegelungszustand der wenigstens einen Verriegelungsvorrichtung wenigstens eine Aufnahme der Trägerplattform wenigstens teilweise umfasst.

Des Weiteren kann die Verriegelungsvorrichtung wenigstens eine Sperrklinke aufweisen, die in dem geschlossenen Verriegelungszustand der wenigstens einen Verriegelungsvorrichtung die Bewegung der wenigstens einen Verriegelungsklaue wenigstens annähernd blockiert.

Erfindungsgemäß kann ferner vorgesehen sein, dass an der wenigstens einen Verriegelungsvorrichtung wenigstens ein Verschluss vorhanden ist, der in dem geschlossenen Verriegelungszustand der wenigstens einen Verriegelungsvorrichtung die Bewegung der wenigstens einen Sperrklinke der wenigstens einen Verriegelungsvorrichtung wenigstens annähernd blockiert.

Die klappbare Griffvorrichtung, wenigstens eine, insbesondere an der Außenseite des portablen optischen Sensormoduls angeordnete Führungseinrichtung und wenigstens ein darin geführter vorzugsweise zweiteilig ausgebildeter Linearauszug können wenigstens ein Kniehebelgelenk zum Schließen der wenigstens einen Verriegelungsvorrichtung bilden.

Die klappbare Griffvorrichtung kann durch den wenigstens einen Linearauszug mit dem wenigstens einen Verschluss der wenigstens einen Verriegelungsvorrichtung verbunden sein.

Beim Herunterklappen der klappbaren Griffvorrichtung kann der wenigstens eine Linearauszug verkürzt und der wenigstens eine Verschluss nach unten gedrückt werden, wodurch die wenigstens eine Sperrklinke in der Bewegung blockiert wird.

In dem geschlossenen Verriegelungszustand der wenigstens einen Verriegelungsvorrichtung kann die klappbare Griffvorrichtung an der Außenseite des portablen optischen Sensormoduls wenigstens annähernd anliegen.

Das Schließen der wenigstens einen Verriegelungsvorrichtung kann in einfacher Weise durch ein Herunterklappen der klappbaren Griffvorrichtung erfolgen.

Vorteilhaft ist es, wenn an zwei sich gegenüberliegenden Außenseiten des portablen optischen Sensormoduls jeweils eine Verriegelungsvorrichtung angeordnet ist.

Sonach können die klappbaren Griffvorrichtungen der jeweiligen Verriegelungsvorrichtungen auf beiden Seiten als Tragegriffe, insbesondere für mehrere Personen verwendet werden.

Die klappbaren Griffvorrichtungen der Verriegelungsvorrichtungen können dazu wenigstens annähernd in einer, d.h. derselben horizontalen Ebene angeordnet sein.

Das portable optische Sensormodul kann als Luftbildkamera zur Aufnahme von Luftbildern aus Flugzeugen oder aber beispielsweise als Lidarsystem oder dergleichen ausgebildet sein.

Vorteilhafte Ausgestaltungen und Weiterbildungen der Erfindung ergeben sich aus den Unteransprüchen. Nachfolgend ist anhand der Zeichnung ein Ausführungsbeispiel prinzipmäßig beschrieben.

Es zeigen:
- Fig. 1: eine vereinfachte Seitenansicht eines erfindungsgemäßen portablen optischen Sensormoduls in geöffnetem Verriegelungszustand und einer Trägerplattform;
- Fig. 2: eine vereinfachte Draufsicht gemäß dem Pfeil I aus Fig. 1 auf das erfindungsgemäße portable optische Sensormodul in geöffnetem Verriegelungszustand; und
- Fig. 3: eine vereinfachte Seitenansicht des erfindungsgemäßen portablen optischen Sensormoduls in geschlossenem Verriegelungszustand.

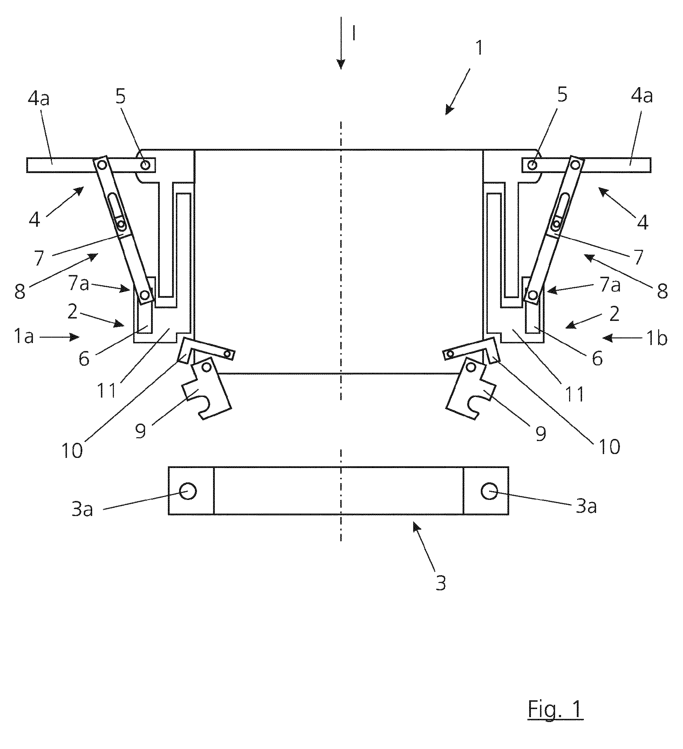

Im oberen Bereich der Figur 1 ist ein erfindungsgemäßes als Luftbildkamera für die Aufnahme von Luftbildern ausgebildetes portables optisches Sensormodul 1 dargestellt. In weiteren nicht dargestellten Ausführungsbeispielen könnte das portable optische Sensormodul auch ein Lidarsystem für die Bestimmung von physikalischen oder chemischen Parametern der Atmosphäre oder dergleichen sein.

An zwei gegenüberliegenden Außenseiten 1a, 1b des portablen optischen Sensormoduls 1 ist jeweils eine Verriegelungsvorrichtung 2 zur lösbaren Befestigung des portablen optischen Sensormoduls 1 auf einer Trägerplattform 3 angeordnet. Die Verriegelungsvorrichtungen 2 weisen jeweils eine klappbare Griffvorrichtung 4 auf, welche in dem in Figur 1 gezeigten geöffneten Verriegelungszustand der Verriegelungsvorrichtungen 2 Tragegriffe 4a für das portable optische Sensormodul 1 bilden. Die beiden klappbaren Griffvorrichtungen 2 befinden sich in einer gemeinsamen horizontalen Ebene.

Zur Befestigung der beiden klappbaren Griffvorrichtungen 4 an den beiden gegenüberliegenden Außenseiten 1a, 1b des portablen optischen Sensormoduls 1 ist jeweils ein Lager 5 vorhanden, so dass die beiden klappbaren Griffvorrichtungen 4 nach unten an das portable optische Sensormodul 1 herangeklappt und auch nach oben in die beschriebene horizontale Ebene bewegt werden können. Die jeweilige klappbare Griffvorrichtung 4, jeweils eine an der Außenseite 1a, 1b des portablen optischen Sensormoduls 1 angeordnete Führungseinrichtung 6 und jeweils ein darin geführter vorzugsweise zweiteilig ausgebildeter Linearauszug 7 bilden jeweils ein Kniehebelgelenk 8 zum Schließen der wenigstens einen Verriegelungsvorrichtung 2. In dem in Figur 1 gezeigten geöffneten Verriegelungszustand befinden sich die unteren Enden 7a der Linearauszüge 7 jeweils im oberen Bereich der Führungseinrichtungen 6. Die Linearauszüge 7 bilden auch die Verbindungselemente zu den weiteren Elementen der Verriegelungsvorrichtungen 2, die an den beiden Außenseiten 1a, 1b des portablen optischen Sensormoduls 1 jeweils unterhalb der klappbaren Griffvorrichtungen 4 angeordnet sind. Die Verriegelungsvorrichtungen 2 weisen jeweils eine Verriegelungsklaue 9 auf, welche in dem geschlossenen Verriegelungszustand wenigstens eine Aufnahme 3a der Trägerplattform 3 wenigstens teilweise umfasst. Des Weiteren weist die jeweilige Verriegelungsvorrichtung 2 eine Sperrklinke 10 auf, die in dem geschlossenen Verriegelungszustand der jeweiligen Verriegelungsvorrichtung 2 die Bewegung der wenigstens einen Verriegelungsklaue 9 blockiert. Darüber hinaus ist an der jeweiligen Verriegelungsvorrichtung 2 ein Verschluss 11 vorhanden, der in dem geschlossenen Verriegelungszustand die Bewegung der Sperrklinke 10 blockiert.

Die Verriegelungsvorrichtungen 2 umfassen somit jeweils eine Sperrklinke 10, eine Verriegelungsklaue 9 sowie einen Verschluss 11. Für den Einsatz des portablen optischen Sensormoduls 1 kann es notwendig sein, dieses fest mit der Trägerplattform 3 zu verbinden. An den beiden Enden der Trägerplattform 3 sind im vorliegenden Ausführungsbeispiel jeweils zwei Aufnahmen 3a vorhanden, so dass die Trägerplattform 3 insgesamt vier Aufnahmen 3a aufweist. Die Aufnahmen 3a dienen, wie vorstehend erwähnt, zur Aufnahme der Verriegelungsklauen 9 der beiden Verriegelungsvorrichtungen 2, nachdem das portable optische Sensormodul 1 auf die Trägerplattform 3 gesetzt wurde. Die Trägerplattform 3 kann auch eine passive und/oder aktive Lagestabilisierung zum Betrieb des portablen optischen Sensormoduls 1 während eines Flugs aufweisen.

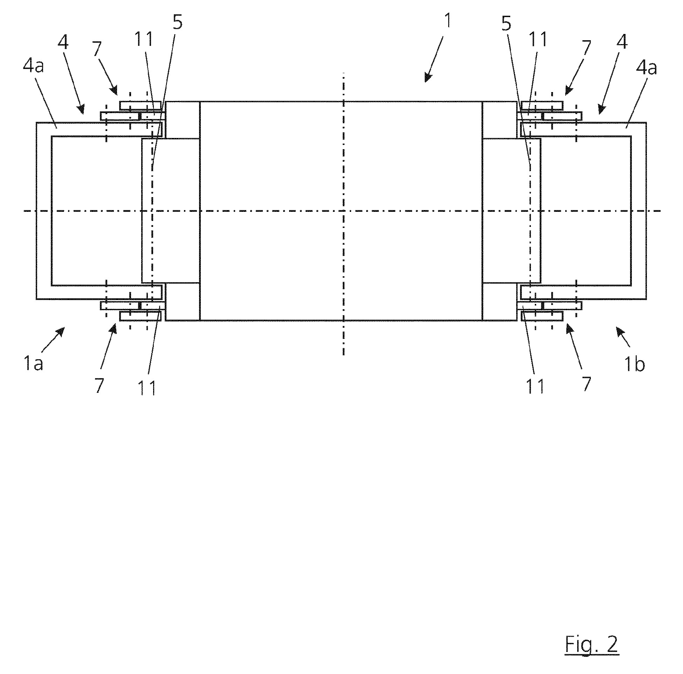

In Figur 2 ist eine Draufsicht des portablen optischen Sensormoduls 1 gemäß dem Pfeil I aus der Figur 1 gezeigt, wobei wiederum der geöffnete Verriegelungszustand dargestellt ist. Hier ist insbesondere die Möglichkeit zu erkennen, dass das portable optische Sensormodul 1 über die klappbaren Griffvorrichtungen 4 bzw. die Tragegriffe 4a vergleichsweise einfach von einem Ort zu einem anderen transportiert werden kann.

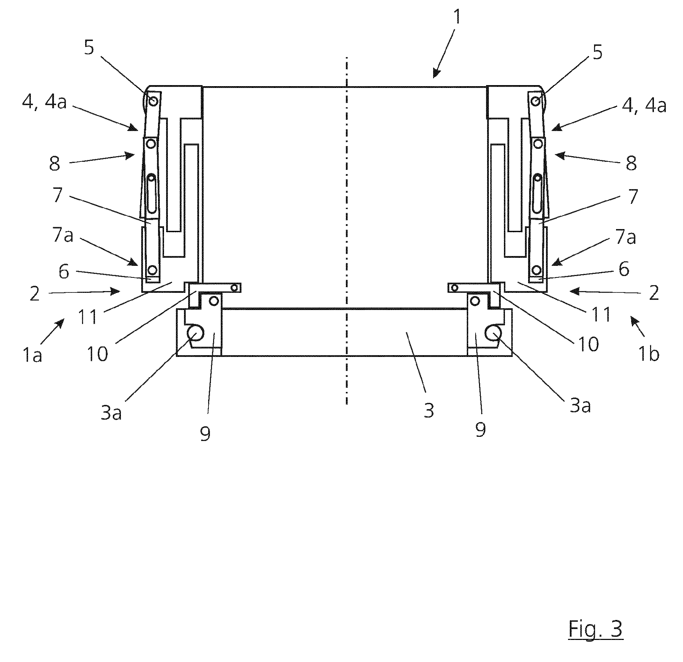

Figur 3 zeigt das portable optische Sensormodul 1 und die Trägerplattform 3 in einer Seitenansicht vergleichbar zu der Ansicht in Figur 1. Das portable optische Sensormodul 1 wurde dabei zuvor auf die Trägerplattform 3 aufgesetzt. Dabei umfassen die beiden Verriegelungsklauen 9 jeweils die Aufnahme 3a der Trägerplattform 3. Die beiden klappbaren Griffvorrichtungen 4 sind an das portable optische Sensormodul 1 angeklappt und die Verriegelungsvorrichtungen 2 geschlossen bzw. in dem geschlossenen Verriegelungszustand. Das Schließen der Verriegelungsvorrichtungen 2 erfolgt durch das Heranklappen der an der jeweiligen Außenseite 1a, 1b befindlichen klappbaren Griffvorrichtungen 4. Bei diesem Vorgang wird der Linearauszug 7, der am oberen Ende mit der klappbaren Griffvorrichtung 4 verbunden ist und der am unteren Ende in der Führungseinrichtung 6 geführt wird, nach unten bewegt. Der Linearauszug 7 ist zweigeteilt und derart verbunden, dass sich der Linearauszug 7 beim Herunterklappen der klappbaren Griffvorrichtung 4 verkürzt. Dabei wird auch der Verschluss 11 heruntergedrückt, so dass schließlich die Sperrklinke 10 die Verriegelungsklaue 9 in der Bewegung blockiert. Falls beide klappbaren Griffvorrichtungen 4 an das portable optische Sensormodul 1 angeklappt sind, sind im vorliegenden Ausführungsbeispiel das portable optische Sensormodul 1 und die Trägerplattform 3 bis zum Lösen der Verriegelungsvorrichtung 2 fest miteinander verbunden. Das Lösen erfolgt dabei in umgekehrter Reihenfolge wie das Schließen der Verriegelungsvorrichtungen 2. In dem geschlossenen Verriegelungszustand liegen die klappbaren Griffvorrichtungen 4 wenigstens annähernd an den Außenseiten 1a, 1b an.

## Patentansprüche

1. Portables optisches Sensormodul (1), welches als Luftbildkamera (1) zur Aufnahme von Luftbildern aus Flugzeugen ausgebildet ist, mit wenigstens einer an einer Au-Qenseite (1a, 1b) des portablen optischen Sensormoduls (1) angeordneten Verriegelungsvorrichtung (2) zur lösbaren Befestigung des portablen optischen Sensormoduls (1) auf einer Trägerplattform (3),
**dadurch gekennzeichnet, dass** die wenigstens eine Verriegelungsvorrichtung (2) eine klappbare Griffvorrichtung (4) aufweist, welche in einem geöffneten Verriegelungszustand der wenigstens einen Verriegelungsvorrichtung (2) einen Tragegriff (4a) für das portable optische Sensormodul (1) bildet.

2. Portables optisches Sensormodul nach Anspruch 1,
**dadurch gekennzeichnet, dass** die wenigstens eine Verriegelungsvorrichtung (2) wenigstens eine Verriegelungsklaue (9) aufweist, welche in dem geschlossenen Verriegelungszustand der wenigstens einen Verriegelungsvorrichtung (2) wenigstens eine Aufnahme der Trägerplattform (3a) wenigstens teilweise umfasst.

3. Portables optisches Sensormodul nach Anspruch 2,
**dadurch gekennzeichnet, dass** die Verriegelungsvorrichtung (2) wenigstens eine Sperrklinke (10) aufweist, die in dem geschlossenen Verriegelungszustand der wenigstens einen Verriegelungsvorrichtung (2) die Bewegung der wenigstens einen Verriegelungsklaue (9) wenigstens annähernd blockiert.

4. Portables optisches Sensormodul nach Anspruch 3,
**dadurch gekennzeichnet, dass** an der wenigstens einen Verriegelungsvorrichtung (2) wenigstens ein Verschluss (11) vorhanden ist, der in dem geschlossenen Verriegelungszustand der wenigstens einen Verriegelungsvorrichtung (2) die Bewegung der wenigstens einen Sperrklinke (10) der wenigstens einen Verriegelungsvorrichtung (2) wenigstens annähernd blockiert.

5. Portables optisches Sensormodul einem der Ansprüche 1 bis 4,
**dadurch gekennzeichnet, dass** die klappbare Griffvorrichtung (4), wenigstens eine, insbesondere an der Außenseite (1a, 1b) des portablen optischen Sensormoduls (1) angeordnete Führungseinrichtung (6) und wenigstens ein darin geführter, vorzugsweise zweiteilig ausgebildeter Linearauszug (7) wenigstens ein Kniehebelgelenk (8) zum Schließen der wenigstens einen Verriegelungsvorrichtung (2) bilden.

6. Portables optisches Sensormodul nach Anspruch 5,
**dadurch gekennzeichnet, dass** die klappbare Griffvorrichtung (4) durch den wenigstens einen Linearauszug (7) mit dem wenigstens einen Verschluss (11) der wenigstens einen Verriegelungsvorrichtung (2) verbunden ist.

7. Portables optisches Sensormodul nach Anspruch 6,
**dadurch gekennzeichnet, dass** beim Heranklappen der klappbaren Griffvorrichtung (4) der wenigstens eine Linearauszug (7) verkürzt und der wenigstens eine Verschluss (11) nach unten gedrückt wird, wodurch die wenigstens eine Sperrklinke (10) in der Bewegung blockiert wird.

8. Portables optisches Sensormodul einem der Ansprüche 1 bis 7,
**dadurch gekennzeichnet, dass** in dem geschlossenen Verriegelungszustand der wenigstens einen Verriegelungsvorrichtung (2) die klappbare Griffvorrichtung (4) an der Außenseite (1a, 1b) des portablen optischen Sensormoduls (1) wenigstens annähernd anliegt.

9. Portables optisches Sensormodul nach einem der Ansprüche 1 bis 8,
**dadurch gekennzeichnet, dass** das Schließen der wenigstens einen Verriegelungsvorrichtung (2) durch ein Heranklappen der klappbaren Griffvorrichtung (4) an das portable optische Sensormodul (1) erfolgt.

10. Portables optisches Sensormodul nach einem der Ansprüche 1 bis 9,
**dadurch gekennzeichnet, dass** an zwei sich gegenüber liegenden Außenseiten (1a, 1b) des portablen optischen Sensormoduls (1) jeweils eine Verriegelungsvorrichtung (2) angeordnet ist.

11. Portables optisches Sensormodul nach Anspruch 10,
**dadurch gekennzeichnet, dass** die klappbaren Griffvorrichtungen (4) der Verriegelungsvorrichtungen (2) wenigstens annähernd in derselben horizontalen Ebene angeordnet sind.

## Claims

1. A portable optical sensor module (1), which is configured as an aerial picture camera (1) for taking aerial pictures from planes, having at least one locking apparatus (2), which is arranged on an outer side 1b) of the portable optical sensor module (1), for releasably mounting the portable optical sensor module (1) on a carrier platform (3),
**characterized in that**
the at least one locking apparatus (2) has a foldable handle apparatus (4), which, in an opened locking state of the at least one locking apparatus (2), forms a carrying handle (4a) for the portable optical sensor module (1).

2. The portable optical sensor module (1) as claimed in claim 1, **characterized in that**
the at least one locking apparatus (2) has at least one locking catch (9), which, in the closed locking state of the at least one locking apparatus (2), at least partially encloses at least one receptacle of the carrier platform (3a).

3. The portable optical sensor module (1) as claimed in claim 2, **characterized in that**
the locking apparatus (2) has at least one locking pawl (10), which, in the closed locking state of the at least one locking apparatus (2), at least approximately blocks the movement of the at least one locking catch (9).

4. The portable optical sensor module (1) as claimed in claim 3, **characterized in that**
at least one closure (11) is present on the at least one locking apparatus (2), which closure, in the closed locking state of the at least one locking apparatus (2), at least approximately blocks the movement of the at least one locking pawl (10) of the at least one locking apparatus (2).

5. The portable optical sensor module (1) as claimed in one of claims 1 to 4,
**characterized in that**
the foldable handle apparatus (4), at least one guide device (6), which is arranged in particular on the outer side 1b) of the portable optical sensor module (1), and at least one linear pull-out mechanism (7), which is guided therein and is preferably configured in two parts, form at least one toggle lever linkage (8) for closing the at least one locking apparatus (2).

6. The portable optical sensor module (1) as claimed in claim 5, **characterized in that**
the foldable handle apparatus (4) is connected to the at least one closure (11) of the at least one locking apparatus (2) via the at least one linear pull-out mechanism (7).

7. The portable optical sensor module (1) as claimed in claim 6, **characterized in that**,
when the foldable handle apparatus (4) is folded, the at least one linear pull-out mechanism (7) is shortened and the at least one closure (11) is pushed down, as a result of which the at least one locking pawl (10) is blocked in its movement.

8. The portable optical sensor module (1) as claimed in one of claims 1 to 7,
**characterized in that**,
in the closed locking state of the at least one locking apparatus (2), the foldable handle apparatus (4) at least approximately rests against the outer side 1b) of the portable optical sensor module (1).

9. The portable optical sensor module (1) as claimed in one of claims 1 to 8,
**characterized in that**
the at least one locking apparatus (2) is closed by the foldable handle apparatus (4) being folded to rest against the portable optical sensor module (1).

10. The portable optical sensor module (1) as claimed in one of claims 1 to 9,
**characterized in that**
in each case one locking apparatus (2) is arranged on two mutually opposite outer sides 1b) of the portable optical sensor module (1).

11. The portable optical sensor module (1) as claimed in claim 10, **characterized in that**
the foldable handle apparatuses (4) of the locking apparatuses (2) are arranged at least approximately in the same horizontal plane.

## Revendications

1. Module de capteur optique portable (1), conçu comme une caméra aérienne (1) pour la prise de vues aériennes par des avions, comportant au moins une installation de verrouillage (2), montée sur un côté extérieur (1a, 1 b) du module de capteur optique portable (1), pour fixer de façon amovible le module de capteur optique portable (1) sur une plateforme de support (3), **caractérisé en ce que**,
ladite au moins une installation de verrouillage (2) comporte un dispositif à poignée rabattable (4), qui, dans une position de verrouillage ouverte de ladite au moins une installation de verrouillage (2), forme une poignée de portage (4a) pour porter le module de capteur optique portable (1).

2. Module de capteur optique portable (1), selon la revendication 1, **caractérisé en ce que**,
ladite au moins une installation de verrouillage (2) comporte au moins une griffe de verrouillage (9), qui, dans la position fermée de verrouillage de ladite au moins une installation de verrouillage (2) englobe au moins partiellement une tenue de la plateforme de support (3a).

3. Module de capteur optique portable (1), selon la revendication 2, **caractérisé en ce que**,
l'installation de verrouillage (2) comporte au moins un cliquet (10) qui, dans la position fermée de verrouillage de ladite au moins une installation de verrouillage (2), bloque au moins approximativement le mouvement de ladite au moins une griffe de verrouillage (9).

4. Module de capteur optique portable (1), selon la revendication 3, **caractérisé en ce que**,
ladite au moins une installation de verrouillage (2) est pourvue d'au moins un verrou (11), qui, dans la position fermée de verrouillage de ladite au moins une installation de verrouillage (2), bloque au moins approximativement le mouvement dudit au moins un cliquet (10) de ladite au moins une installation de verrouillage (2).

5. Module de capteur optique portable (1), selon l'une des revendications 1 à 4,
**caractérisé en ce que**,
le dispositif de poignée rabattable (4), comporte au moins un équipement de guidage (6), disposé en particulier sur le côté extérieur (1a, 1 b) du module de capteur optique portable (1) et au moins une extension linéaire (7), qui est guidée dans cette dernière, avantageusement composée de deux éléments, formant au moins une articulation coudée (8) pour fermer ladite au moins une installation de verrouillage (2).

6. Module de capteur optique portable (1), selon la revendication 5, **caractérisé en ce que**,
le dispositif de poignée rabattable (4), est lié par l'intermédiaire de ladite au moins une extension linéaire (7) avec ledit au moins un verrou (11) de ladite au moins une installation de verrouillage (2).

7. Module de capteur optique portable (1), selon la revendication 6, **caractérisé en ce que**,
lors du basculement du dispositif de poignée rabattable (4), ladite au moins une extension linéaire (7) est raccourcie et ledit au moins un verrou (11) est poussé vers le bas, de sorte que ledit au moins un cliquet (10) est bloqué dans son mouvement.

8. Module de capteur optique portable (1), selon l'une des revendications 1 à 7,
**caractérisé en ce que**,
dans l'état fermé et verrouillé de ladite au moins installation de verrouillage (2), le dispositif de poignée rabattable (4) est au moins approximativement en appui contre le côté extérieur (1 a, 1 b) du module de capteur optique portable (1).

9. Module de capteur optique portable (1), selon l'une des revendications 1 à 8,
**caractérisé en ce que**,
la fermeture de ladite au moins une installation de verrouillage (2) s'effectue par le basculement du dispositif de poignée rabattable (4) contre le module de capteur optique portable (1).

10. Module de capteur optique portable (1), selon l'une des revendications 1 à 9,
**caractérisé en ce que**,
sur deux côtés extérieurs opposés (1a, 1b) le module de capteur optique portable (1) comporte respectivement une installation de verrouillage (2).

11. Module de capteur optique portable (1), selon la revendication 10, **caractérisé en ce que**,
le dispositif de poignée rabattable (4) de l'installation de verrouillage (2) est au moins approximativement disposé dans le même plan horizontal.
